(19) Europäisches Patentamt European Patent Office Office européen des brevets

(11) **EP 4 294 168 B1**

(12) **EUROPEAN PATENT SPECIFICATION**

(45) Date of publication and mention of the grant of the patent:
**30.04.2025 Bulletin 2025/18**

(21) Application number: **22704606.7**

(22) Date of filing: **03.02.2022**

(51) International Patent Classification (IPC):
**A01D 34/00** (2006.01)    **G06T 7/00** (2017.01)

(52) Cooperative Patent Classification (CPC):
**A01D 34/008; G06T 7/11; G06T 7/136;**
G06T 2207/10016; G06T 2207/30261

(86) International application number:
**PCT/SE2022/050116**

(87) International publication number:
**WO 2022/177485 (25.08.2022 Gazette 2022/34)**

(54) **ROBOTIC WORK TOOL SYSTEM AND METHOD FOR DETERMINING WHETHER THERE IS AN INTERFERING OBJECT ON A CAMERA UNIT OF A ROBOTIC WORK TOOL**

ROBOTISCHES ARBEITSWERKZEUGSYSTEM UND VERFAHREN ZUR BESTIMMUNG, OB EIN STÖROBJEKT AUF EINER KAMERAEINHEIT EINES ROBOTISCHEN ARBEITSWERKZEUGS VORLIEGT

SYSTÈME D'OUTIL DE TRAVAIL ROBOTISÉ ET PROCÉDÉ POUR DÉTERMINER S'IL EXISTE UN OBJET INTERFÉRENT SUR UNE UNITÉ CAMÉRA D'UN OUTIL DE TRAVAIL ROBOTISÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2021 SE 2150168**

(43) Date of publication of application:
**27.12.2023 Bulletin 2023/52**

(73) Proprietor: **HUSQVARNA AB**
**561 82 Huskvarna (SE)**

(72) Inventors:
• **DAHAN, Odi**
  **St. Oranit (IL)**
• **MEITAV, Omri**
  **St. Hod Hasharo (IL)**

(56) References cited:
**EP-A1- 2 620 050     EP-A1- 3 553 620**
**US-A1- 2015 338 204     US-A1- 2019 114 798**
**US-B1- 9 576 210**

**Description**

<u>TECHNICAL FIELD</u>

The present disclosure relates to a robotic work tool system as well as a method for determining whether there is an interfering object on a camera unit of a robotic lawn mower.

<u>BACKGROUND</u>

A robotic work tool is an autonomous robot apparatus that is used to perform certain tasks, for example cutting lawn grass, demolish an area or cleaning a floor. In order to perform these tasks, the robotic work tool generally uses various sensors in order to perceive its environment and the area within which the robotic work tool is intended to operate. During recent years, the robotic work tools have been developed to use cameras to capture images and video streams of their surroundings. The images or video streams may then be processed in order to detect and classify objects and surfaces within the surroundings of the robotic work tools. A robotic lawn mower according to the state of the art is disclosed by EP 3 553 620 A1.

However, even if the use of cameras to detect and classify objects and surfaces within the surroundings of the robotic work tools generally has improved the operation of the robotic work tools, the inventors have realized that interfering objects, such as dirt, may cover these cameras and disturb the view of the cameras. This may affect the ability to correctly detect and classify objects and surfaces within the surroundings of the robotic work tools. The inventors have realized that there is a need for detecting any such disturbing and interfering objects to prevent that the view of the cameras are disturbed.

<u>SUMMARY</u>

Robotic work tools may operate in harsh environments that include a lot of dirt, mud, moisture and other disturbing or interfering object. These interfering objects may accumulate on the camera units of the robotic work tools and gradually eliminate their ability to capture clear images. This may degrade the object detection accuracy of the robotic work tools and lead to unwanted system behaviour. Thus, as mentioned in the background section, there is a need for determining when the object detection accuracy of a robotic work tool is degraded. If the object detection accuracy is degraded, that poses safety risks to the robot work tool's environment and the robot work tool itself. Therefore, a system and a method for detecting when there is an interfering object on a camera unit of a robotic work tool is needed.

In view of the above, it is therefore a general object of the aspects and embodiments described throughout this disclosure to provide a robotic work tool system that detects any disturbing and interfering objects on the camera unit of the robotic work tool, which may degrade the operation of the robotic work tool.

This general object has been addressed by the appended independent claims. Advantageous embodiments are defined in the appended dependent claims.

According to a first aspect, there is provided a robotic work tool system for determining whether there is an interfering object on a camera unit of a robotic work tool.

According to the invention, the robotic work tool is a robotic lawn mower configured to perform a task, such as a work task, autonomously.

The robotic work tool system comprises at least one controller. The at least one controller is configured to obtain a plurality of image frames reflecting the view of the camera unit of the robotic work tool. Each of the obtained image frames is associated with a different position and/or angle compared to the other obtained plurality of image frames. The at least one controller is further configured to determine, based on the obtained image frames, pixel intensity gradients within the view of the camera unit; and to compare each of the determined pixel intensity gradients against at least one threshold. The at least one controller is further configured to determine, based on the comparison, whether there is an interfering object on the camera unit of the robotic work tool. Thereafter, the at least one controller is configured to control a subsequent action of the robotic work tool system based on the determination whether there is an interfering object on the camera unit of the robotic work tool.

In some embodiments, the at least one controller is further configured to determine, based on the obtained image frames and the determination whether there is an interfering object on the camera unit, a proportion of an image frame not occluded by any interfering objects.

In some embodiments, the at least one controller is further configured to determine, based on the determination whether there is an interfering object on the camera unit, an intensity of all pixels within the obtained image frames comprising an interfering object; and to determine, based on the determination whether there is an interfering object on the camera unit, an intensity of all pixels within the obtained image frames not comprising an interfering object. The at least one controller is further configured to compare the determined intensity for pixels comprising an interfering object with the determined intensity for pixels not comprising an interfering object; and to determine, based on the comparison, a Transparency Ratio (TR) for any determined interfering object on the camera unit of the robotic work tool.

In some embodiments, the at least one controller is further configured to determine, based on the determination whether there is an interfering object on the camera unit, a blurriness of all pixels within the obtained image frames comprising an interfering object; and to determine, based on the determination whether there is an interfering object on the camera unit, a blurriness of all pixels within the obtained image frames not comprising an interfering object. The at least one controller is further configured to compare the determined blurriness for pixels comprising an interfering object with the determined blurriness for pixels not comprising an interfering object; and to determine, based on the comparison, a Blurriness Ratio (BR) for any determined interfering object on the camera unit of the robotic work tool.

In some embodiments, the at least one controller is further configured to determine, based on the determined proportion of the image frame not occluded by any interfering objects, the determined TR and the determined BR, an object detection reliability of the robotic work tool system.

In some embodiments, the at least one controller is configured to determine the object detection reliability of the robotic work tool system by determining a weight for each of the determined proportion of the image frame not occluded by any interfering objects, the determined TR and the determined BR. Thereafter each of the weighted determined proportion of the image frame not occluded by any interfering objects, the weighted determined TR and the weighted determined BR is added to a sum in order to determine the object detection reliability of the robotic work tool system.

In some embodiments, when the determined object detection reliability of the robotic work tool system is below an object detection reliability threshold, the at least one controller is configured to control a subsequent action of the robotic work tool system to avoid degraded operation of the robotic work tool due to the low object detection reliability.

In some embodiments, the at least one controller is further configured to receive an indication that any interfering object on the camera unit of the robotic work tool has been removed; and reset, based on the indication, the object detection reliability of the robotic work tool system.

At least one controller is configured to control the subsequent action of the robotic work tool system by transmitting a message to an output device. The message may define reliable vs un-reliable image pixels within the obtained image frames.

In some embodiments, when it is determined that there is an interfering object on the camera unit of the robotic work tool, the at least one controller is configured to control the subsequent action of the robotic work tool system by initiating a cleaning operation of the robotic work tool to remove any interfering object on the camera unit of the robotic work tool.

In some embodiments, when it is determined that there is an interfering object on the camera unit of the robotic work tool, the at least one controller is configured to control the subsequent action of the robotic work tool system by controlling a travel operation of the robotic work tool.

In some embodiments, the plurality of image frames is obtained from the camera unit while at least one of the camera unit and the robotic work tool is moving.

In some embodiments, the plurality of image frames reflecting the view of the camera unit of the robotic work tool is obtained with fixed predefined intervals.

The at least one controller is configured to determine pixel intensity gradients within the view of the camera unit by determining a two-dimensional (2D) pixel intensity gradient image for each of the plurality of obtained image frame; and by determining a pixel-wise norm of each 2D pixel intensity gradient image. Thereafter the determined pixel-wise norm of each 2D pixel intensity gradient image is averaged into a single image frame of average norms of pixel intensity gradients.

In some embodiments, the at least one controller is further configured to determine, based on the determined pixel intensity gradients, contours of an interfering object on the camera unit.

In some embodiments, said at least one threshold comprises a lower threshold and a higher threshold and the at least one controller is configured to determine whether there is an interfering object on the camera unit of the robotic work tool based on the comparison by determining that there is an interfering object on the camera unit of the robotic work tool if the determined pixel intensity gradient is below the lower threshold. Furthermore, it is determined there is non-disturbing interfering object on the camera unit of the robotic work tool if the determined pixel intensity gradient is above the lower threshold and below the higher threshold; and it is determined that there is no interfering object on the camera unit of the robotic work tool if the determined pixel intensity gradient is above the higher threshold.

In some embodiments, the position and/or angle associated with each of the obtained image frames is obtained from at least one position sensor of the robotic work tool.

According to the invention, the robotic work tool system comprises a camera unit.

The robotic work tool comprises a robotic apparatus configured to perform a work task autonomously.

According to a second aspect, there is provided a method implemented by the robotic work tool system according to the first aspect.

In one exemplary implementation, the method is performed by at least one controller, for determining whether there is an interfering object on a camera unit of a robotic work tool. The method comprises obtaining a plurality of image frames reflecting the view of the camera unit of the robotic work tool. Each of the obtained image frames is associated with a different position and/or angle compared to the other obtained plurality of image frames. The method further comprises determining, based on the obtained image frames, pixel intensity gradients within the view of the camera unit and comparing each of the determined pixel intensity gradients against at least one threshold. Thereafter, the method comprises determining, based on the comparison, whether there is an interfering object on the camera unit of the robotic work tool; and controlling a subsequent action of the robotic work tool system based on the determination whether there is an interfering object on the camera unit of the robotic work tool.

In some embodiments, the method further comprises determining, based on the obtained image frames and the determination whether there is an interfering object on the camera unit, a proportion of an image frame not occluded by any interfering objects.

In some embodiments, the method further comprises determining, based on the determination whether there is an interfering object on the camera unit, an intensity of all pixels within the obtained image frames comprising an interfering object. The method further comprises determining, based on the determination whether there is an interfering object on the camera unit, an intensity of all pixels within the obtained image frames not comprising an interfering object; and comparing the determined intensity for pixels comprising an interfering object with the determined intensity for pixels not comprising an interfering object. The method further comprises determining, based on the comparison, a TR for any determined interfering object on the camera unit of the robotic work tool.

In some embodiments, the method further comprises determining, based on the determination whether there is an interfering object on the camera unit, a blurriness of all pixels within the obtained image frames comprising an interfering object; and determining, based on the determination whether there is an interfering object on the camera unit, a blurriness of all pixels within the obtained image frames not comprising an interfering object. The method further comprises comparing the determined blurriness for pixels comprising an interfering object with the determined blurriness for pixels not comprising an interfering object; and determining, based on the comparison, a BR for any determined interfering object on the camera unit of the robotic work tool.

In some embodiments, the method further comprises determining, based on the determined proportion of the image frame not occluded by any interfering objects, the determined TR and the determined BR, an object detection reliability of the robotic work tool system. The object detection reliability may be determined by determining a weight for each of the determined proportion of the image frame not occluded by any interfering objects, the determined TR and the determined BR; and adding each of the weighted determined proportion of the image frame not occluded by any interfering objects, the weighted determined TR and the weighted determined BR to a sum in order to determine the object detection reliability of the robotic work tool system.

In some embodiments, when the determined object detection reliability of the robotic work tool system is below an object detection reliability threshold, the method further comprises controlling a subsequent action of the robotic work tool system to avoid degraded operation of the robotic work tool due to the low object detection reliability.

In some embodiments, the method further comprises receiving an indication that any interfering object on the camera unit of the robotic work tool has been removed; and resetting, based on the indication, the object detection reliability of the robotic work tool system.

In some embodiments, the step of controlling the subsequent action of the robotic work tool system comprises transmitting a message to an output device. The message may define reliable vs un-reliable image pixels within the obtained image frames.

In some embodiments, when it is determined that there is an interfering object on the camera unit of the robotic work tool, the step of controlling the subsequent action of the robotic work tool system comprises initiating a cleaning operation of the robotic work tool to remove any interfering object on the camera unit of the robotic work tool.

In some embodiments, when it is determined that there is an interfering object on the camera unit of the robotic work tool, the step of controlling the subsequent action of the robotic work tool system comprises controlling a travel operation of the robotic work tool.

In some embodiments, the plurality of image frames is obtained from the camera unit while at least one of the camera unit and the robotic work tool is moving.

In some embodiments, the plurality of image frames reflecting the view of the camera unit of the robotic work tool is obtained with fixed predefined intervals.

In some embodiments, the step of determining pixel intensity gradients within the view of the camera unit comprises determining a 2D pixel intensity gradient image for each of the plurality of obtained image frame and determining a pixel-wise norm of each 2D pixel intensity gradient image. It further comprises averaging the determined pixel-wise norm of each 2D pixel intensity gradient image into a single image frame of average norms of pixel intensity gradients.

In some embodiments, the method further comprises determining, based on the determined pixel intensity gradients, contours of an interfering object on the camera unit.

In some embodiments, said at least one threshold comprises a lower threshold and a higher threshold and the step of determining whether there is an interfering object on the camera unit of the robotic work tool based on the comparison comprises determining that there is an interfering object on the camera unit of the robotic work tool if the determined pixel intensity gradient is below the lower threshold; and determining that there is non-disturbing interfering object on the camera unit of the robotic work tool if the determined pixel intensity gradient is above the lower threshold and below the higher threshold. The method step further comprises determining that there is no interfering object on the camera unit of the robotic work tool if the determined pixel intensity gradient is above the higher threshold.

In some embodiments, the position and/or angle associated with each of the obtained image frames is obtained from at least one position sensor of the robotic work tool.

In some embodiments, the robotic work tool system comprises the robotic work tool comprising the camera unit.

In some embodiments, the robotic work tool comprises a robot apparatus configured to perform a work task autonomously.

Some of the above embodiments eliminate or at least reduce the problems discussed above. By determining the pixel intensity gradients and their size within the view of the camera unit of the robotic work tool, it may be determined whether there is any interfering object on the camera of the robotic work tool. Based on this determination, it may be possible to control at least one subsequent action of the robotic work tool such that any safety risks to the robot work tool and its environment may be eliminated, or at least reduced. Thus, a robotic work tool system and method are provided that improve the operation of the robotic work tool.

BRIEF DESCRIPTION OF DRAWINGS

These and other aspects, features and advantages will be apparent and elucidated from the following description of various embodiments, reference being made to the accompanying drawings, in which:

Figure 1 illustrates a schematic view of a robotic work tool system;
Figure 2 shows an example of an obtained image frame;
Figure 3 shows an example of an image frame after 2D Sobel filtering;
Figure 4 shows an example of an average norm image frame;
Figure 5 shows an example of an equalized average norm image frame;
Figure 6 shows an example of a segmentation and classification applied to the equalized average norm image frame;
Figure 7 shows an example of interfering object contours applied to the example frame;
Figure 8 shows a flowchart of an example method performed by a robotic work tool system;
Figure 9 shows an example of the method;
Figure 10 shows an example of the method;
Figure 11 shows an example of the method;
Figure 12 shows an example of the method; and
Figure 13 shows a schematic view of a computer-readable medium.

DETAILED DESCRIPTION

The disclosed embodiments will now be described more fully hereinafter with reference to the accompanying drawings, in which certain embodiments of the robotic work tool system are shown. This robotic work tool system may, however, be embodied in many different forms and should not be construed as limited to the embodiments set forth herein; rather, these embodiments are provided by way of example so that this disclosure will be thorough and complete, and will fully convey the scope of the robotic work tool system to those skilled in the art. Like numbers refer to like elements throughout.

In one of its aspects, the disclosure presented herein concerns a robotic work tool system for determining whether there is an interfering object on a camera unit of a robotic work tool. The interfering object may be, for example, dirt, mud, a substance, fluid, snow, water or moist. The robotic work tool system for determining whether there is an interfering object on a camera unit may determine if there is an interfering object on a lens of the camera unit. Alternatively, the robotic work tool system may determine if there is an interfering object on a transparent material protecting the camera unit, i.e. in front of the camera.

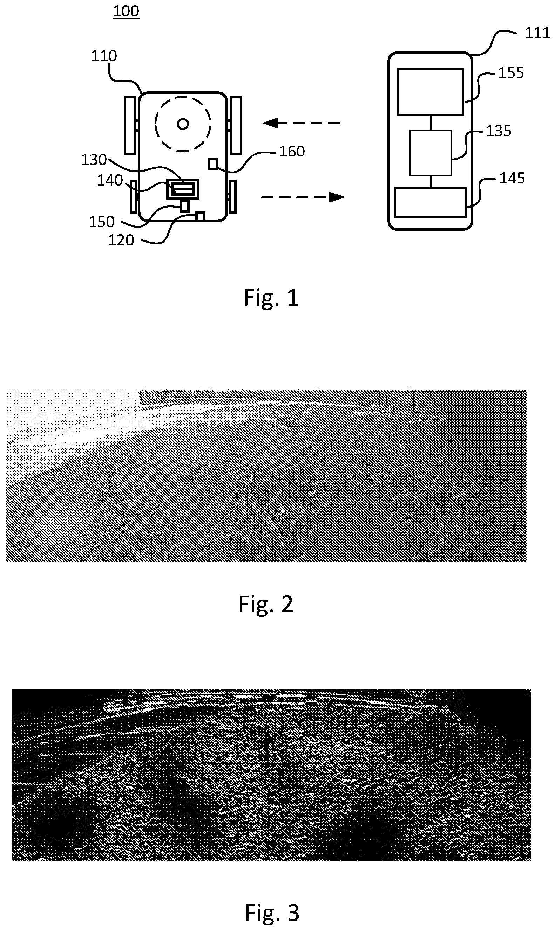

Figure 1 illustrates a schematic view of a robotic work tool system 100. As will be appreciated, the schematic view is not to scale. The present disclosure is now going to be described with reference to Figure 1. The robotic work tool system 100 comprises at least one controller 130, 135. As may be appreciated, the robotic work tool system 100 may comprise a plurality of controllers 130, 135 communicatively coupled to each other. By combining a plurality of controllers 130, 135, even higher processing power may be achieved.

The robotic work tool system 100 will mainly be described in general terms of a robotic work tool system 100 for determining whether there is an interfering object on a camera unit of a robotic work tool, such as the robotic work tool 110 illustrated in Figure 1. It should be understood that the robotic work tool system 100 described herein may be implemented together with any type of autonomous machine that may perform a desired activity. The robotic work tool 110 may comprise a robotic apparatus configured to perform a task, such as a work task, autonomously. Examples of such types of robotic apparatuses include, without limitation, lawn mowers, construction robotic work tools, cleaning robotic work tools, automatic moving cameras and/or drones, polishing work tools, repair work tools, surface-processing work tools (for indoors and/or outdoors), demolition work tools and/or agricultural, park and green space maintenance robots. Regardless of which type of robotic apparatus that is used, the robotic work tool 110 according to the present disclosure comprises a camera unit 120 shown in Figure 1.

As illustrated in Figure 1, the at least one controller 130 may be located within the robotic work tool 110. Alternatively, or additionally, the at least one controller 135 may be communicatively coupled to the robotic work tool 110 by a wireless communication interface. The wireless communication interface may also be used to communicate with other devices, such as servers, personal computers or smartphones, charging stations, remote controls, other robotic work tools or any remote device, which comprises a wireless communication interface and a controller. Examples of such wireless communication are Bluetooth®, Global System Mobile (GSM), Long Term Evolution (LTE) and 5G or New Radio (5G NR), to name a few. In some embodiments, the robotic work tool system 100 may comprise the robotic work tool 110 comprising the camera unit 120.

In one embodiment, the at least one controller 130, 135 is embodied as software, e.g. remotely in a cloud-based solution. In another embodiment, the at least one controller 130, 135 may be embodied as a hardware controller. The at least one controller 130, 135 may be implemented using any suitable, publicly available processor, computing means, virtual computer, cloud computer or Programmable Logic Circuit (PLC). The at least one controller 130, 135 may be implemented using instructions that enable hardware functionality, for example, by using executable computer program instructions in a general-purpose or special-purpose processor that may be stored on a computer readable storage medium (disk, memory etc.) to be executed by such a processor. The controller 130, 135 may be configured to read instructions from a memory 140, 145 and execute these instructions to determine whether there is an interfering object on a camera unit 120 of the robotic work tool 110. The memory may be implemented using any commonly known technology for computer-readable memories such as ROM, RAM, SRAM, DRAM, FLASH, DDR, SDRAM or some other memory technology.

As illustrated in Figure 1, the robotic work tool 110 comprises at least one camera unit 120. The camera unit 120 is configured to obtain image frames reflecting the view of the camera unit 120, i.e. the surroundings of the robotic work tool 110. As previously described, these image frames may be processed in order to detect and classify objects and surfaces within the surroundings of the robotic work tool 110. The camera unit 120 may be realized in a number of different ways as long as it is configured to capture video streams, still pictures and/or other data reflecting the scenery surrounding the robotic work tool 110.

A first embodiment according to the first aspect will now be described. The at least one controller 130, 135 is configured to obtain a plurality of image frames reflecting the view of the camera unit 120 of the robotic work tool 110. Figure 2 illustrates an example of such an image frame. Each of the obtained image frames is associated with a different position and/or angle compared to the other obtained plurality of image frames. The plurality of image frames may be obtained from the camera unit 120 while at least one of the camera unit 120 and the robotic work tool 110 is moving. The plurality of image frames reflecting the view of the camera unit 120 of the robotic work tool 110 may be obtained with fixed predefined regular, or irregular, intervals. The intervals may be, for example, time based and/or angular or distance based. Thus, in order to determine whether any interfering object is on the camera unit 120, a plurality of image frames from different positions and/or angles is used, which will reduce the probability for false positive detection of interfering objects. The position and/or angle associated with each of the obtained image frames may be obtained from at least one position sensor 160 of the robotic work tool 110. Examples of such position sensor 160 include, without limitation, wheel odometry, RTK/GPS, GNSS-navigation and positioning, SLAM, IMU data and INS data.

The at least one controller 130, 135 is further configured to determine, based on the obtained image frames, pixel intensity gradients within the view of the camera unit 120. By obtaining image frames from a plurality of different positions and/or angles, the scenery of the camera unit 120 changes. However, the interfering objects will appear as stationary points within the camera view and for the interfering objects on the camera unit 120, no motion, or change, will appear. The interfering object will be located at the same spot on the camera unit 120 regardless of the position and/or angle of the robotic work tool 110 and/or the camera unit 120 of the robotic work tool 110. Thus, interfering objects may generally have lower pixel intensity gradient than the scenery, or at least they will have pixel intensity gradients that deviate from expected pixel intensity gradients.

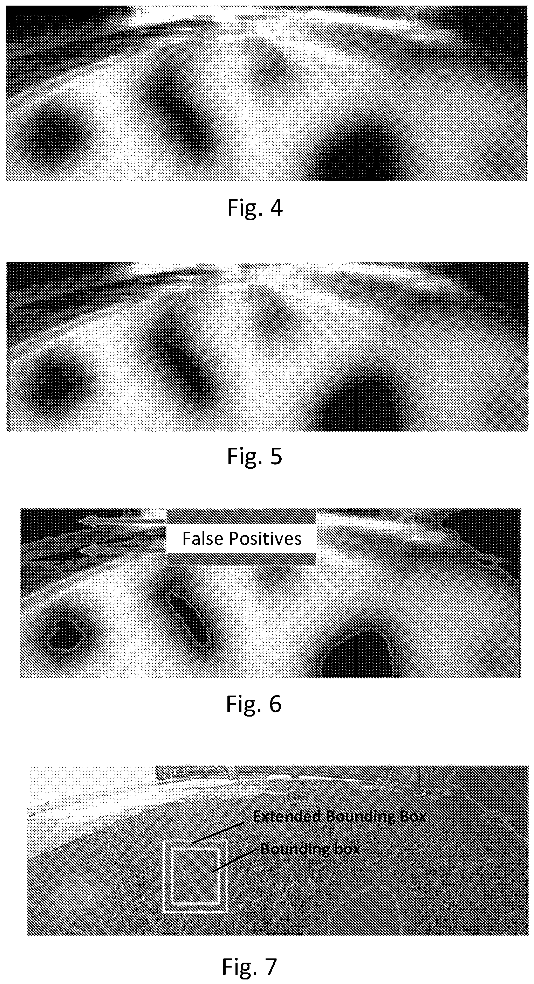

The pixel intensity gradients within the view of the camera unit 120 may be determined by the at least one controller 130, 135 by determining a two-dimensional (2D) pixel intensity gradient image for each of the plurality of obtained image frame. This may be performed, for example, by using vertical and horizontal Sobel filtering. Figure 3 shows an example of an image frame after vertical and horizontal, i.e. 2D, Sobel filtering. Thereafter a pixel-wise norm of each 2D pixel intensity gradient image may be determined and the determined pixel-wise norm of each 2D pixel intensity gradient image may be averaged into a single image frame of average norms of pixel intensity gradients. Figure 4 shows an example of such averaged norm image. As previously described, in this single image frame, pixels that were occluded by an interfering object will generally have a very low average norm, while the other pixels will have a higher average norm. The average norm may thereafter, in some embodiments, be equalized using K-means clustering. Such equalization may allow clustering of the average norm values to adapt to external lighting conditions. Figure 5 shows an example of an equalized average norm image frame using K-mean clustering.

The at least one controller 130, 135 is further configured to compare each of the determined pixel intensity gradients against at least one threshold and to determine, based on the comparison, whether there is an interfering object on the camera unit 120 of the robotic work tool 110. Thus, by comparing the pixel intensity gradients against at least one threshold it is possible to determine whether the determined pixel intensity gradients deviate from expected pixel intensity gradients for the scenery and to determine whether there is an interfering object on the camera unit 120 of the robotic work tool 110. Accordingly, each pixel may be classified as an interfering pixel, e.g. dirt, or as scene, i.e. the surrounding of the robotic work tool 110.

In some embodiments, the at least one threshold may comprise one predefined threshold, and if it is determined that a pixel intensity gradient is below this threshold, it may be determined that there is an interfering object on the camera unit 120, i.e. that there are stationary feature points on the camera unit 120. However, in preferred embodiments, the at least one threshold may comprise a lower threshold and a higher threshold. In these embodiments, the at least one controller130, 135 may be configured to determine whether there is an interfering object on the camera unit 120 of the robotic work tool 100 based on the comparison by determining that there is an interfering object on the camera unit 120 if the determined pixel intensity gradient is below the lower threshold. It may further be determined that there is a non-disturbing interfering object on the camera unit 120 if the determined pixel intensity gradient is above the lower threshold, but below the higher threshold. Thus, if the pixel intensity gradient is between the lower and the higher threshold, there may be an object, or something, on the camera unit 120, but this object is a non-disturbing object. Finally, it may be determined that there is no interfering object on the camera unit 120 of the robotic work tool 110 if the determined pixel intensity gradient is above the higher threshold. In some further embodiments, the at least one threshold may further comprise a droplet threshold, which is a highest threshold, i.e. a threshold even higher than the previously described higher threshold. For example, a water droplet may distort the camera view into an omnidirectional sub-lens area, where motion flow may be higher than in the rest of the camera field of view. Thus, if the determined pixel intensity gradient is above this droplet threshold, it may be determined that there is an interfering object such as a water droplet on the camera unit 120.

Figure 6 illustrates an example image of an equalized average norm image, where segmentation and classification have been applied to the obtained image frames. As seen in Figure 6, this image additionally shows two false positive areas, i.e. areas that incorrectly have been determined, or classified, to comprise interfering objects. However, these false interfering objects may be removed based on their average intensity. Their average intensity in the original image frame may be higher than any expected intensity. Thus, this may be higher than a false positive threshold.

After that it has been determined whether there is an interfering object on the camera unit 120 of the robotic work tool 110, the at least one controller 130, 135

is configured to control a subsequent action of the robotic work tool system 100 based on the determination. Accordingly, different actions may be taken by the robotic work tool system 100 depending on whether there is an interfering object on the camera unit 120 of the robotic work tool 110 or not.

Accordingly, the present disclosure provides a robotic work tool system 100 that may detect interfering objects that cover and disturb the view of a camera unit 120 of a robotic work tool 110. As these interfering objects may affect the ability to correctly detect and classify objects and surfaces within the surroundings of the robotic work tool 110, the present disclosure makes it possible to prevent that the object detection accuracy of the robotic work tool 110 is degraded. If the object detection accuracy is degraded, safety risks may be posed to the robot work tool's environment and the robot work tool 110 itself. However, with the present disclosure these risks are eliminated, or at least reduced. Additionally, the present disclosure provides a way to avoid object detection degradation in an efficient way, which consumes a limited amount of processing powers. This may be especially suitable when using the at least one processor 130 within the robotic work tool 110 to perform the interfering object detection. The robotic work tool's processor capacity is limited compared to, e.g., a vehicle. Thus, the present disclosure further detects interfering objects on a camera unit using reduced processing power.

As previously described, the at least one controller 130, 135 is configured to control a subsequent action of the robotic work tool system 100 based on the determination whether there is an interfering object on the camera unit 120 of the robotic work tool 110. In some embodiments, the at least one controller 130, 135 may be configured to control the subsequent action of the robotic work tool system 100 by transmitting a message to an output device 150, 155. The output device 150 may be located in the robotic work tool 110, or the output device 155 may be located in a device 111 that is separate from the robotic work tool 110. The transmitted message may comprise information about whether there is determined to be any interfering objects on the camera unit 120 of the robotic work tool 110 or not. The transmitted message may define, for example, reliable vs un-reliable image pixels within the obtained image frames. Alternatively, or additionally, the transmitted message may comprise an alarm warning a user of the robotic work tool system 100 that there is an interfering object on the camera unit 120 of the robotic work tool 110.

Alternatively, or additionally, when it is determined that there is an interfering object on the camera unit 120 of the robotic work tool 110, the at least one controller 130, 135 may be configured to control the subsequent action of the robotic work tool system 100 by initiating a cleaning operation of the robotic work tool 110. The cleaning operation may be initiated to remove any interfering object on the camera unit 120 of the robotic work tool 110. The cleaning operation may, e.g., comprise an automatic cleaning operation of rinsing off the camera unit 120 and/or wiping the camera unit 120. In some embodiments, the at least one controller 130, 135 may further be configured to, after that a cleaning operation has been performed, perform a new determination whether there are any interfering objects on the camera unit 120. In case it is determined that there still is an interfering object on the camera unit 120, i.e. that an area of the camera unit 120 did not get cleaned by the automatic cleaning operation, and/or if the interfering object severely disturbs the operation of the robotic work tool 110, then a message and/or alarm may be sent to an operation central, operator, or nearby user. This may be performed in order to call for human intervention, i.e. cleaning of the camera unit 120.

Alternatively, or additionally, when it is determined that there is an interfering object on the camera unit 120 of the robotic work tool 110, the at least one controller 130, 135 may be configured to control the subsequent action of the robotic work tool system 100 by controlling a travel operation of the robotic work tool 110. For example, the robotic work tool 110 may be controlled to stop moving, or the robotic work tool 100 may be controlled to travel to a cleaning station where it may be cleaned.

In some embodiments, the at least one controller 130, 135 may be further configured to perform a basic feature extraction based on the determined pixel intensity gradients. For example, the at least one controller 130, 135 may be configured to determine, based on the determined pixel intensity gradients, contours of an interfering object on the camera unit 120. The at least one controller 130, 135 may further be configured to determine a bounding box and an extended bounding box, where the two boxes share a same centre and aspect ratio, but where the extended box is larger by a certain percent in each dimension. Figure 7 shows an example of an image frame where dirt contours have been applied. Figure 7 also shows the concepts of bounding box and extended bounding box.

Furthermore, the at least one controller 130, 135 may be configured to determine, based on the obtained image frames and the determination whether there is an interfering object on the camera unit 120, a proportion of an image frame not occluded by any interfering objects. The proportion of an image frame not occluded by any interfering objects may also be referred to as a Clear Area Ratio (CAR) metric. The CAR metric is thus the proportion of the camera view that is not occluded by an interfering object, such as e.g. dirt. A CAR that equals zero means that there is no interfering object on the camera unit 120, while a CAR that equals one means that the entire view of the camera unit 120 is covered by interfering objects.

Other features that may be extracted based on the determination whether there is an interfering object on the camera unit 120 are a Transparency Ratio (TR) and a Blurriness ratio (BR). These are now going to be described more in detail.

The TR may be determined by the at least one controller 130, 135 by determining, an intensity of all pixels within the obtained image frames comprising an interfering object, and by determining, an intensity of all pixels within the obtained image frames not comprising an interfering object. Thereafter, the at least one controller 130, 135 may be configured to compare the determined intensity for pixels comprising an interfering object with the determined intensity for pixels not comprising an interfering object, and, based on the comparison, a TR for any determined interfering object on the camera unit 120 of the robotic work tool 110 may be determined. The TR metric values range between 0 to 1, where 0 means that the interfering object are fully opaque, while 1 means that the interfering object are fully transparent. Thus, the TR is a metric of the transparency of the interfering object on the camera unit 120 of the robotic work tool 110.

The BR may be determined by determining, based on the determination whether there is an interfering object on the camera unit 120, a blurriness of all pixels within the obtained image frames comprising an interfering object and by determining, based on the determination whether there is an interfering object on the camera unit 120, a blurriness of all pixels within the obtained image frames not comprising an interfering object. Thereafter, the at least one controller 130, 135 may be configured to compare the determined blurriness for pixels comprising an interfering object with the determined blurriness for pixels not comprising an interfering object, and, based on the comparison, a BR for any determined interfering object on the camera unit 120 of the robotic work tool 110 may be determined. The blurriness may be determined as the variance of a Laplacian filtered region of interest, e.g. the interfering objects. The BR metric values range between 0 to 1, where 0 means that the interfering object are fully blurred, while 1 means that the sharpness of the objects in front of the interfering objects on the camera unit 120 is not being degraded by the interfering object.

Based on a determined proportion of the image frame not occluded by any interfering objects, the determined TR and the determined BR, the at least one controller 130, 135 of the robotic work tool system 100 may be configured to determine an object detection reliability of the robotic work tool system 100. The at least one controller 130, 135 may thus be configured to estimate the system's capability to detect objects correctly in the presence of interfering objects on the camera, i.e. an Object Detection Resilience Metric (ODRM). The ODRM metric values range between 0 and 1. When ODRM is 0, it means that there is no object detection capability at all. When ODRM is 1, it means that the camera unit 120 is clean and that there should be no degradation to the object detection of the robotic work tool system 100. The smaller the ODRM is, the higher the risk of object detection degradation becomes. The ODRM may be used by system architects to create multiple robot functionality levels. For example, when the determined object detection reliability of the robotic work tool system 100 is below an object detection reliability threshold, the at least one controller 130, 135 may be configured to control a subsequent action of the robotic work tool system 100 to avoid degraded operation of the robotic work tool (210) due to the low object detection reliability. If the ODRM is lower than the object detection reliability threshold, only larger objects may be detected with high confidence, while many smaller objects may be missed. Thus, at such occasions, the at least one controller 130, 135 may be configured to control the robotic work tool 110 to, for example, stop moving, transmitting an alarm or initiating a cleaning operation. Thus, the at least one controller 130, 135 may be configured to control the subsequent action of the robotic work tool system 100 to be any of the previously described actions.

In case a cleaning operation of the robotic work tool 110 has been performed, the at least one controller 130, 135 may further be configured to receive an indication that any interfering object on the camera unit 120 of the robotic work tool 110 has been removed. Then, the at least one controller 130, 135 may be configured to reset, based on the indication, the object detection reliability of the robotic work tool system 100. In other embodiments, the at least one controller 130, 135 may be configured to reset the object detection reliability of the robotic work tool system 100 when a certain time has elapsed or after a certain movement of the robotic work tool 110 and/or the camera unit 120 has been performed.

The at least one controller 130, 135 may be configured to determine the object detection reliability of the robotic work tool system 100 by determining a weight for each of the determined proportion of the image frame not occluded by any interfering objects, the determined TR and the determined BR. Each of the weighted determined proportion of the image frame not occluded by any interfering objects, the weighted determined TR and the weighted determined BR may be added to a sum in order to determine the object detection reliability of the robotic work tool system 100. Thus, another way of expressing the object detection reliability of the robotic work tool system 100 may be by the following formula;

$$ODRM = \alpha \cdot CAR + \beta \cdot TR + \gamma \cdot BR,$$

where $0 \leq \alpha \leq 1$, $0 \leq \beta \leq 1$, $0 \leq \gamma < 1$ and $\alpha + \beta + \gamma = 1$.
The weights $\alpha$, $\beta$ and $\gamma$ may be determined, for example, by using a dataset of ground-truth images with known objects. These have been acquired using a known interfering object. Thus, multiple datasets of image frames of objects that were captured using a camera unit 120 with interfering objects with various occlusion patterns on them. Each dataset may comprise of multiple image frames of different objects and scenes that were captured with one occlusion pattern. The objects in those images may be manually annotated using bounding boxes and/or semantic segmentation. This annotation may be considered as the ground-truth. An object detection model in inference mode may be used in order to detect the objects in all datasets. For each dataset, a standard object detection quality metric Q, such as Mean Average Precision (mAP) may be determined. A loss function may be defined by Loss=Q^2-ORDM^2. The weights $\alpha$, $\beta$ and $\gamma$ may thereafter be selected such that they minimize the error between the predictor ODRM and the standard object detection quality metric Q. The error minimization may be performed by using a standard regression algorithm, e.g. Multiple Linear Regression (MLR).

The robotic work tool system 100 presented herein provides a way of detecting, segmenting and analysing interfering objects, such as e.g. dirt, spots and smudges, on a camera unit 120 of a robotic work tool 110. This allows the robotic work tool system 100 to control subsequent actions based on this and for example, reduce functionality and movement, up to a full stop, of the robotic work tool 110 if necessary. This allows any safety risks to the robot work tool 110 and its environment to be eliminated, or at least reduced. Thus, a robotic work tool system 100 is provided that improves the operation of a robotic work tool 110.

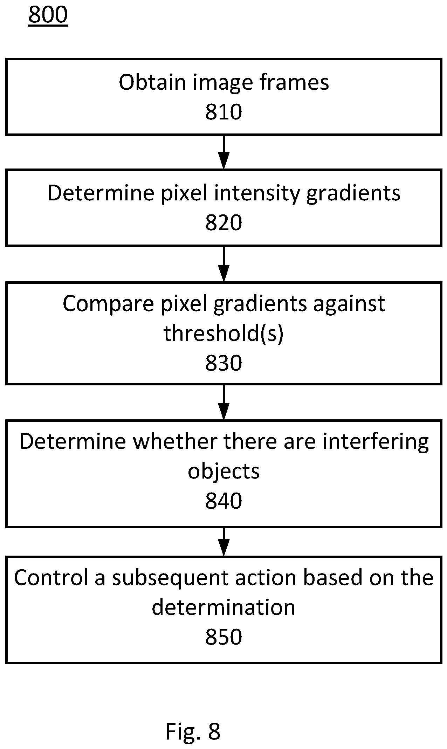

According to a second aspect, there is provided a method implemented in the robotic work tool system 100 according to the first aspect. The method will be described with reference to Figure 8.

In one embodiment, the method 800 may be performed by a robotic work tool system 100 for determining whether there is an interfering object on a camera unit 120 of a robotic work tool 110. As illustrated in Figure 8, the method 800 starts with step 810 of obtaining a plurality of image frames reflecting the view of the camera unit 120 of the robotic work tool 110. Each of the obtained image frames is associated with a different position and/or angle compared to the other obtained plurality of image frames. The method 800 further comprises step 820 of determining, based on the obtained image frames, pixel intensity gradients within the view of the camera unit 120 of the robotic work tool 110 and step 830 of comparing each of the determined pixel intensity gradients against at least one threshold. The method 800 further comprises step 840 of determining, based on the comparison, whether there is an interfering object on the camera unit 120 of the robotic work tool 110. Thereafter, the method 800 comprises step 850 of controlling a subsequent action of the robotic work tool system 100 based on the determination whether there is an interfering object on the camera unit 120 of the robotic work tool 110.

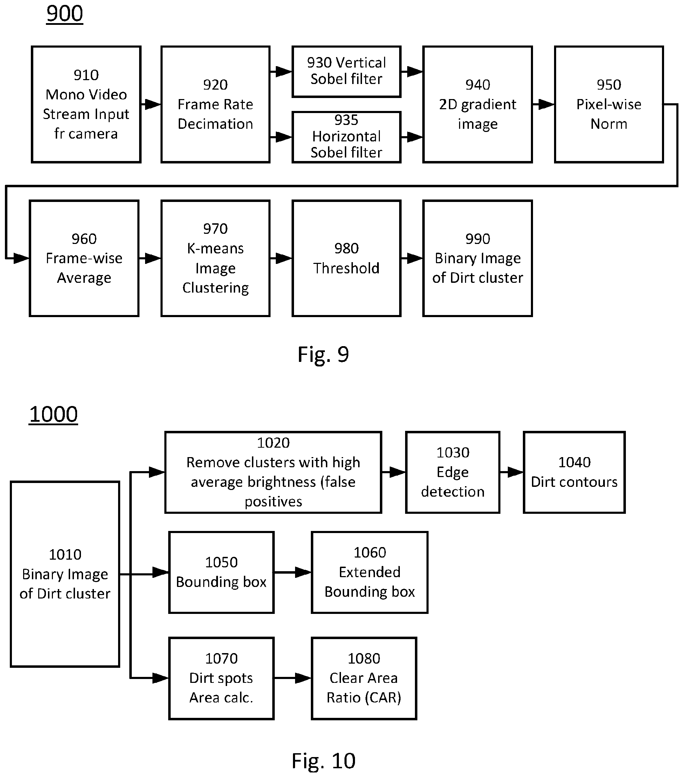

An example of a flow according to the method 800 is illustrated in Figure 9. In some embodiments, the plurality of image frames reflecting the view of the camera unit 120 of the robotic work tool 110 may be obtained with fixed predefined intervals. The image frames may be obtained from a video stream from the robot work tool's camera unit 120 with decimated frame rate, see step 910 and 920 of Figure 9. The frame rate decimation may make it possible to use images from diverse locations and shooting angles. As seen in Figure 9, the method 800 may, according to some embodiments, comprise step 930 and 935 of applying vertical and horizontal Sobel filtering.

In some embodiments, as illustrated in Figure 9, the step 820 of determining pixel intensity gradients within the view of the camera unit 120 may comprise step 940 of determining a 2D pixel intensity gradient image for each of the plurality of obtained image frame and step 950 of determining a pixel-wise norm of each 2D pixel intensity gradient image. It may further comprise step 960 of averaging the determined pixel-wise norm of each 2D pixel intensity gradient image into a single image frame of average norms of pixel intensity gradients.

The example in Figure 9 further comprises step 970 of equalizing the average norm image using K-means clustering. Thereafter, the frames may be compared against thresholds, step 980, and a binary image of an interfering object, such as dirt, may be created, step 990.

In some embodiments, the method 800 may further comprise the steps of performing a basic feature extraction based on the determined pixel intensity gradients, as illustrated in Figure 10. For example, the method may comprise step 1040 of determining, based on the determined pixel intensity gradients, contours of an interfering object on the camera unit 120. The contours of the interfering object, e.g. dirt, may be determined based on step 1010 of receiving binary images of dirt, which may have been determined in accordance with the method 900 illustrated in Figure 9. Thereafter the method 1000 may comprise step 1020 of removing clusters with high average brightness, i.e. false positive interfering objects as illustrated in Figure 6, and step 1030 of detecting the edges of the interfering object.

Other steps of performing basic feature extraction based on the determined pixel intensity gradients are also illustrated in Figure 10, for example, steps 1050 and 1060 of determining a bounding box and an extended bounding box. The two boxes share a same centre and aspect ratio, but where the extended box is larger by a certain percent in each dimension.

Further steps of the basic feature extraction based on the determined pixel intensity gradients may be step 1080 of determining, based on the obtained image frames and the determination whether there is an interfering object on the camera unit, a proportion of an image frame not occluded by any interfering objects. As previously described, this metric may also be referred to as the CAR metric. The CAR may be determined, for example, by obtaining binary images of dirt, step 1010 and the calculating dirt spots areas, step 1070.

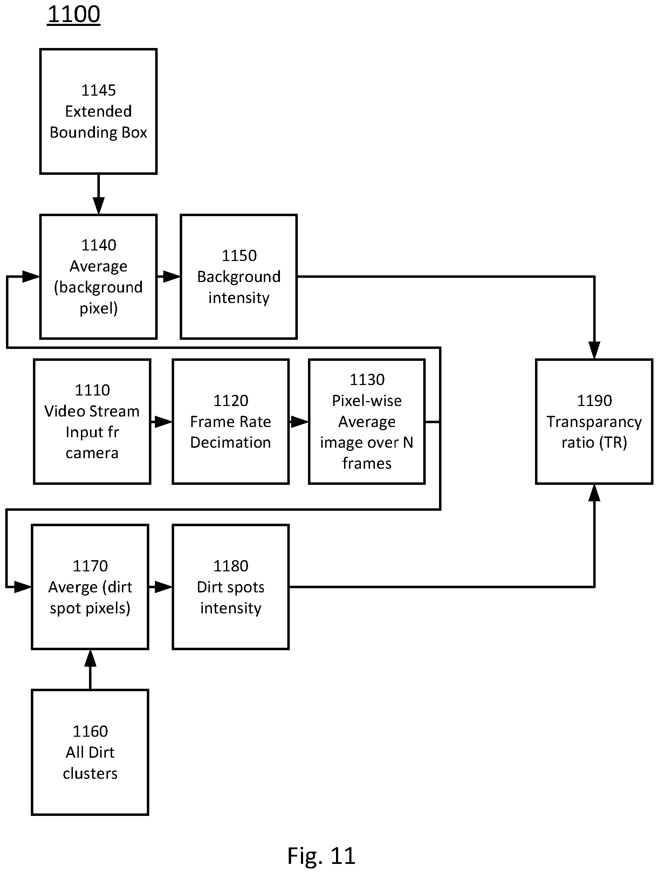

In some embodiments, the method 800 may further comprise step 1190 of determining a TR, as illustrated in Figure 11. The TR may be determined by step 1150 of determining, based on the determination whether there is an interfering object on the camera unit 120, an intensity of all pixels within the obtained image frames comprising an interfering object. The method 1100 may further comprise step 1180 of determining, based on the determination whether there is an interfering object on the camera unit, an intensity of all pixels within the obtained image frames not comprising an interfering object. Thereafter, the TR may be determined, step 1190, by comparing the determined intensity for pixels comprising an interfering object with the determined intensity for pixels not comprising an interfering object and determining, based on the comparison, a TR for any determined interfering object on the camera unit 120 of the robotic work tool 110.

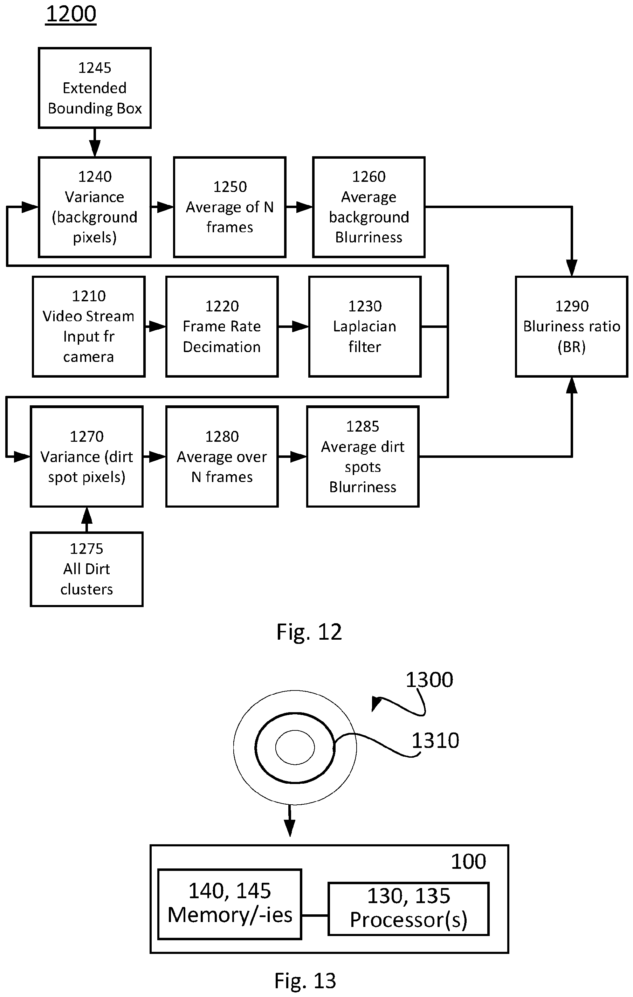

In some embodiments, the method 800 may further comprise step 1290 of determining a BR, as illustrated in Figure 12. This may comprise step 1285 of determining, based on the determination whether there is an interfering object on the camera unit 120, a blurriness of all pixels within the obtained image frames comprising an interfering object. It may further comprise step of 1260 of determining, based on the determination whether there is an interfering object on the camera unit 120, a blurriness of all pixels within the obtained image frames not comprising an interfering object. Thereafter, the BR may be determined, step 1290, by comparing the determined blurriness for pixels comprising an interfering object with the determined blurriness for pixels not comprising an interfering object; and determining, based on the comparison, the BR for any determined interfering object on the camera unit 120 of the robotic work tool 110.

In some embodiments, the method 800 may further comprise determining, based on the determined proportion of the image frame not occluded by any interfering objects, the determined TR and the determined BR, an object detection reliability of the robotic work tool system 100. The object detection reliability may be determined by determining a weight for each of the determined proportion of the image frame not occluded by any interfering objects, the determined TR and the determined BR. Thereafter, each of the weighted determined proportion of the image frame not occluded by any interfering objects, the weighted determined TR and the weighted determined BR may be added to a sum in order to determine the object detection reliability of the robotic work tool system 100.

In some embodiments, when the determined object detection reliability of the robotic work tool system 100 is below an object detection reliability threshold, the method 800 may further comprise controlling a subsequent action of the robotic work tool system 100 to avoid degraded operation of the robotic work tool 110 due to the low object detection reliability.

In some embodiments, the method 800 may further comprise receiving an indication that any interfering object on the camera unit 120 of the robotic work tool 110 has been removed; and resetting, based on the indication, the object detection reliability of the robotic work tool system 100.

In some embodiments, the step 850 of controlling the subsequent action of the robotic work tool system 100 may comprise transmitting a message to an output device 150, 155. The message may define reliable vs unreliable image pixels within the obtained image frames.

In some embodiments, when it is determined that there is an interfering object on the camera unit 120 of the robotic work tool 110, the step of 850 controlling the subsequent action of the robotic work tool system 100 may comprise initiating a cleaning operation of the robotic work tool 110. The cleaning operation may be initiated to remove any interfering object on the camera unit 120 of the robotic work tool 110.

In some embodiments, when it is determined that there is an interfering object on the camera unit 120 of the robotic work tool 110, the step 850 of controlling the subsequent action of the robotic work tool system 100 may comprise controlling a travel operation of the robotic work tool 110.

In some embodiments, the plurality of image frames may be obtained from the camera unit 120 while at least one of the camera unit 120 and the robotic work tool 110 is moving.

In some embodiments, the method 800 may further comprise determining, based on the determined pixel intensity gradients, contours of an interfering object on the camera unit 120.

In some embodiments, said at least one threshold may comprise a lower threshold and a higher threshold. Then, the step 840 of determining whether there is an interfering object on the camera unit 120 of the robotic work tool 110 based on the comparison may comprise determining that there is an interfering object on the camera unit 120 of the robotic work tool 110 if the determined pixel intensity gradient is below the lower threshold. The method step may further comprise determining that there is a non-disturbing interfering object on the camera unit 120 of the robotic work tool 110 if the determined pixel intensity gradient is above the lower threshold and below the higher threshold. The method step may further comprise determining that there is no interfering object on the camera unit 120 of the robotic work tool 110 if the determined pixel intensity gradient is above the higher threshold.

In some embodiments, the position and/or angle associated with each of the obtained image frames may be obtained from at least one position sensor 160 of the robotic work tool 110.

In some embodiments, the robotic work tool system 100 may comprise the robotic work tool 110 comprising the camera unit 120.

In some embodiments, the robotic work tool 110 may comprise a robot apparatus configured to perform a work task autonomously.

With the proposed method 800, it may be possible to detect interfering objects that cover and disturb the view of a camera unit 120 of a robotic work tool 110. As these interfering objects may affect the ability to correctly detect and classify objects and surfaces within the surroundings of the robotic work tool 110, it is possible to prevent that the object detection accuracy of the robotic work tool 110 is degraded. If the object detection accuracy is degraded, that poses safety risks to both the robot work tool's environment and to the robot work tool 110 itself. With the present disclosure these risks are eliminated, or at least reduced. Additionally, the method 800 provides a solution to detect interfering objects on a camera unit 120 of the robotic work tool 110 in an efficient way, which consumes a limited amount of processing powers. Thus, the present disclosure detects interfering objects on a camera unit 120 using reduced processing power.

Figure 13 shows a schematic view of a computer-readable medium which is configured to carry instructions 1310 that when loaded into a controller, such as a processor, execute a method or procedure according to the embodiments disclosed above. The computer-readable medium 1300 is in this embodiment a data disc 300. In one embodiment, the data disc 1300 is a magnetic data storage disc. The data disc 300 is arranged to be connected to or within and read by a reading device, for loading the instructions into the controller. One such example of a reading device in combination with one (or several) data disc(s) 1300 is a hard drive. It should be noted that the computer-readable medium can also be other mediums such as compact discs, digital video discs, flash memories or other memory technologies commonly used. In such an embodiment, the data disc 1300 is one type of a tangible computer-readable medium 1300.

The instructions 1310 may also be downloaded to a computer data reading device, such as the controller 130,135 or other device capable of reading computer coded data on a computer-readable medium, by comprising the instructions 1310 in a computer-readable signal which is transmitted via a wireless (or wired) interface (for example via the Internet) to the computer data reading device for loading the instructions 1310 into a controller. In such an embodiment, the computer-readable signal is one type of a non-tangible computer-readable medium 1300.

References to computer program, instructions, code etc. should be understood to encompass software for a programmable processor or firmware such as, for example, the programmable content of a hardware device whether instructions for a processor, or configuration settings for a fixed-function device, gate array or programmable logic device etc. Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. Still further, although specific terms may be employed herein, they are used in a generic and descriptive sense only and not for purposes of limitation. Therefore, a person skilled in the art would recognize numerous variations to the described embodiments that would still fall within the scope of the appended claims. As used herein, the terms "comprise/-comprises" or "include/includes" do not exclude the presence of other elements or steps. In addition, singular references do not exclude a plurality.

**Claims**

1. A robotic work tool system (100) configured to determine whether there is any disturbing and interfering object, such as dirt, on a camera unit (120) of a robotic lawn mower (110) which may degrade the operation of the robotic lawn mower (110),
   wherein the robotic lawn mower (110) is configured to perform a work task autonomously, and wherein the robotic work tool system (100) comprises at least one controller (130,135) configured to:

   - obtain a plurality of image frames reflecting the view of the camera unit (120) of the robotic lawn mower (110), wherein each of the obtained image frames is associated with a different position and/or angle compared to the other obtained plurality of image frames;
   - determine, based on the obtained image frames, pixel intensity gradients within the view of the camera unit (120);
   - compare each of the determined pixel intensity gradients against at least one threshold; determine, based on the comparison, whether there is an interfering object on the camera unit (120) of the robotic lawn mower (110); and
   - control a subsequent action of the robotic work tool system (100) based on the determination whether there is an interfering object on the camera unit (120) of the robotic lawn mower (110).

2. The robotic work tool system (100) according to claim 1, wherein the at least one controller (130,135) further is configured to:

   - determine, based on the obtained image frames and the determination whether there is an interfering object on the camera unit (120), a proportion of an image frame not occluded by any interfering objects.

3. The robotic work tool system (100) according to claim 2, wherein the at least one controller (130,135) further is configured to:

   - determine, based on the determination whether there is an interfering object on the camera unit (120), an intensity of all pixels within the obtained image frames comprising an interfering object;
   - determine, based on the determination whether there is an interfering object on the camera unit (120), an intensity of all pixels within the obtained image frames not comprising an interfering object;
   - compare the determined intensity for pixels comprising an interfering object with the determined intensity for pixels not comprising an interfering object; and
   - determine, based on the comparison, a transparency ratio for any determined interfering object on the camera unit (120) of the robotic lawn mower (110).

4. The robotic work tool system (100) according to claim 3, wherein the at least one controller (130,135) further is configured to:

   - determine, based on the determination whether there is an interfering object on the camera unit (120), a blurriness of all pixels within the obtained image frames comprising an interfering object;
   - determine, based on the determination whether there is an interfering object on the camera unit (120), a blurriness of all pixels within the obtained image frames not comprising an interfering object;
   - compare the determined blurriness for pixels comprising an interfering object with the determined blurriness for pixels not comprising an interfering object; and
   - determine, based on the comparison, a blurriness ratio for any determined interfering object on the camera unit (120) of the robotic lawn mower (110).

5. The robotic work tool system (100) according to claim 4, wherein the at least one controller (130,135) further is configured to:

   - determine, based on the determined proportion of the image frame not occluded by any interfering objects, the determined transparency ratio and the determined blurriness ratio, an object detection reliability of the robotic work tool system (100).

6. The robotic work tool system (100) according to claim 5, wherein the at least one controller

(130,135) is configured to determine the object detection reliability of the robotic work tool system (100) by:

- determining a weight for each of the determined proportion of the image frame not occluded by any interfering objects, the determined transparency ratio and the determined blurriness ratio; and
- adding each of the weighted determined proportion of the image frame not occluded by any interfering objects, the weighted determined transparency ratio and the weighted determined blurriness ratio to a sum in order to determine the object detection reliability of the robotic work tool system (100).

7. The robotic work tool system (100) according to any of claims 5 and 6, wherein when the determined object detection reliability of the robotic work tool system (100) is below an object detection reliability threshold, the at least one controller (130,135) is configured to:

- control a subsequent action of the robotic work tool system (100) to avoid degraded operation of the robotic lawn mower (110) due to the low object detection reliability.

8. The robotic work tool system (100) according to any of claims 5 to 7, wherein the at least one controller (130,135) is further configured to:

- receive an indication that any interfering object on the camera unit (120) of the robotic lawn mower (110) has been removed; and
- reset, based on the indication, the object detection reliability of the robotic work tool system (100).

9. The robotic work tool system (100) according to any of claims 1 to 8, wherein the at least one controller (130,135) is configured to control the subsequent action of the robotic work tool system (100) by:

- transmitting a message to an output device (140,145).

10. The robotic work tool system (100) according to claim 9, wherein the message defines reliable vs un-reliable image pixels within the obtained image frames.

11. The robotic work tool system (100) according to any of claims 1 to 10, wherein, when it is determined that there is an interfering object on the camera unit (120) of the robotic lawn mower (110), the at least one controller (130,135) is configured to control the subsequent action of the robotic work tool system (100) by:

- initiating a cleaning operation of the robotic lawn mower (110) to remove any interfering object on the camera unit (120) of the robotic lawn mower (110).

12. The robotic work tool system (100) according to any of claims 1 to 11, wherein, when it is determined that there is an interfering object on the camera unit (120) of the robotic lawn mower (110), the at least one controller (130,135) is configured to control the subsequent action of the robotic work tool system (100) by:

- controlling a travel operation of the robotic lawn mower (110).

13. The robotic work tool system (100) according to any of claims 1 to 12, wherein the plurality of image frames is obtained from the camera unit (120) while at least one of the camera unit (120) and the robotic lawn mower (110) is moving.

14. The robotic work tool system (100) according to any of claims 1 to 13, wherein the plurality of image frames reflecting the view of the camera unit (120) of the robotic lawn mower (110) is obtained with fixed predefined intervals.

15. The robotic work tool system (100) according to any of claims 1 to 14, wherein the at least one controller (130,135) is configured to determine pixel intensity gradients within the view of the camera unit (120) by:

- determining a two-dimensional, 2D, pixel intensity gradient image for each of the plurality of obtained image frame;
- determining a pixel-wise norm of each 2D pixel intensity gradient image; and
- averaging the determined pixel-wise norm of each 2D pixel intensity gradient image into a single image frame of average norms of pixel intensity gradients.

16. The robotic work tool system (100) according to any of claims 1 to 13, wherein the at least one controller (130,135) further is configured to:

- determine, based on the determined pixel intensity gradients, contours of an interfering object on the camera unit (120).

17. The robotic work tool system (100) according to any of claims 1 to 16, wherein said at least one threshold comprises a lower threshold and a higher threshold and wherein the at least one controller (130,135) is configured to determine whether there is an interfering object on the camera unit (120) of the robotic lawn mower (110) based on the comparison by:

- determining that there is an interfering object on the camera unit (120) of the robotic lawn mower (110) if the determined pixel intensity gradient is below the lower threshold;
- determining that there is non-disturbing interfering object on the camera unit (120) of the robotic lawn mower (110) if the determined pixel intensity gradient is above the lower threshold and below the higher threshold; and
- determining that there is no interfering object on the camera unit (120) of the robotic lawn mower (110) if the determined pixel intensity gradient is above the higher threshold.

18. The robotic work tool system (100) according to any of claims 1 to 17, wherein the position and/or angle associated with each of the obtained image frames is obtained from at least one position sensor (160) of the robotic lawn mower (110).

19. The robotic work tool system (100) according to any of claims 1 to 18, wherein the robotic work tool system (100) comprises the robotic lawn mower (110) comprising the camera unit (120).

20. A method, performed by at least one controller (130,135), for determining whether there is any disturbing and interfering object, such as dirt, on a camera unit (120) of a robotic lawn mower (110) which may degrade the operation of the robotic lawn mower (110), the robotic lawn mower (110) is configured to perform a work task autonomously, and wherein the method comprises:

- obtaining a plurality of image frames reflecting the view of the camera unit (120) of the robotic lawn mower (110), wherein each of the obtained image frames is associated with a different position and/or angle compared to the other obtained plurality of image frames;
- determining, based on the obtained image frames, pixel intensity gradients within the view of the camera unit (120);
- comparing each of the determined pixel intensity gradients against at least one threshold;
- determining, based on the comparison, whether there is an interfering object on the camera unit (120) of the robotic lawn mower (110); and
- controlling a subsequent action of the robotic work tool system (100) based on the determination whether there is an interfering object on the camera unit (120) of the robotic lawn mower (110).

**Patentansprüche**

1. Roboterarbeitswerkzeugsystem (100), das konfiguriert ist, um zu bestimmen, ob sich auf einer Kameraeinheit (120) eines Rasenmähroboters (110) ein behinderndes und störendes Objekt, wie Schmutz, befindet, das den Betrieb des Rasenmähroboters (110) verschlechtern kann,
wobei der Rasenmähroboter (110) konfiguriert ist, um eine Arbeitsaufgabe autonom auszuführen, und wobei das Roboterarbeitswerkzeugsystem (100) mindestens eine Steuerung (130, 135) umfasst, die konfiguriert ist zum:

- Erhalten einer Vielzahl von Bildrahmen, die die Ansicht der Kameraeinheit (120) des Rasenmähroboters (110) wiedergeben, wobei jeder der erhaltenen Bildrahmen einer anderen Position und/oder einem anderen Winkel zugeordnet ist verglichen mit der anderen erhaltenen Vielzahl von Bildrahmen;
- Bestimmen, auf der Grundlage der erhaltenen Bildrahmen, von Pixelintensitätsgradienten innerhalb der Ansicht der Kameraeinheit (120);
- Vergleichen jedes der bestimmten Pixelintensitätsgradienten mit mindestens einem Schwellenwert; Bestimmen, auf der Grundlage des Vergleichs, ob sich ein störendes Objekt auf der Kameraeinheit (120) des Rasenmähroboters (110) befindet; und
- Steuern einer nachfolgenden Aktion des Roboterarbeitswerkzeugsystems (100) auf der Grundlage der Bestimmung, ob sich ein störendes Objekt auf der Kameraeinheit (120) des Rasenmähroboters (110) befindet.

2. Roboterarbeitswerkzeugsystem (100) nach Anspruch 1, wobei die mindestens eine Steuerung (130, 135) ferner konfiguriert ist zum:

- Bestimmen, auf der Grundlage der erhaltenen Bildrahmen und der Bestimmung, ob sich ein störendes Objekt auf der Kameraeinheit (120) befindet, eines Anteils eines Bildrahmens, der nicht durch störende Objekte verdeckt ist.

3. Roboterarbeitswerkzeugsystem (100) nach Anspruch 2, wobei die mindestens eine Steuerung (130, 135) ferner konfiguriert ist zum:

- Bestimmen, auf der Grundlage der Bestimmung, ob sich ein störendes Objekt auf der Kameraeinheit (120) befindet, einer Intensität aller Pixel innerhalb der erhaltenen Bildrahmen, die ein störendes Objekt umfassen;
- Bestimmen, auf der Grundlage der Bestimmung, ob sich ein störendes Objekt auf der Kameraeinheit (120) befindet, einer Intensität aller Pixel innerhalb der erhaltenen Bildrahmen, die kein störendes Objekt umfassen;

- Vergleichen der bestimmten Intensität für Pixel, die ein störendes Objekt umfassen, mit der bestimmten Intensität für Pixel, die kein störendes Objekt umfassen; und

- Bestimmen, auf der Grundlage des Vergleichs, eines Transparenzverhältnisses für jedes bestimmte störende Objekt auf der Kameraeinheit (120) des Rasenmähroboters (110).

4. Roboterarbeitswerkzeugsystem (100) nach Anspruch 3, wobei die mindestens eine Steuerung (130, 135) ferner konfiguriert ist zum:

- Bestimmen, auf der Grundlage der Bestimmung, ob sich ein störendes Objekt auf der Kameraeinheit (120) befindet, einer Unschärfe aller Pixel innerhalb der erhaltenen Bildrahmen, die ein störendes Objekt umfassen;

- Bestimmen, auf der Grundlage der Bestimmung, ob sich ein störendes Objekt auf der Kameraeinheit (120) befindet, einer Unschärfe aller Pixel innerhalb der erhaltenen Bildrahmen, die kein störendes Objekt umfassen;

- Vergleichen der bestimmten Unschärfe für Pixel, die ein störendes Objekt umfassen, mit der bestimmten Unschärfe für Pixel, die kein störendes Objekt umfassen; und

- Bestimmen, auf der Grundlage des Vergleichs, eines Unschärfeverhältnisses für jedes bestimmte störende Objekt auf der Kameraeinheit (120) des Rasenmähroboters (110).

5. Roboterarbeitswerkzeugsystem (100) nach Anspruch 4, wobei die mindestens eine Steuerung (130, 135) ferner konfiguriert ist zum:

- Bestimmen, auf der Grundlage des bestimmten Anteils des Bildrahmens, der nicht durch störende Objekte verdeckt ist, des bestimmten Transparenzverhältnisses und des bestimmten Unschärfeverhältnisses, einer Objekterkennungszuverlässigkeit des Roboterarbeitswerkzeugsystems (100).

6. Roboterarbeitswerkzeugsystem (100) nach Anspruch 5, wobei die mindestens eine Steuerung (130, 135) konfiguriert ist, um die Objekterkennungszuverlässigkeit des Roboterarbeitswerkzeugsystems (100) zu bestimmen durch:

- Bestimmen einer Gewichtung für jeden der bestimmten Anteile des Bildrahmens, der nicht durch irgendwelche störenden Objekte verdeckt ist, des bestimmten Transparenzverhältnisses und des bestimmten Unschärfeverhältnisses; und

- Addieren jedes gewichteten bestimmten Anteils des Bildrahmens, der nicht durch störende Objekte verdeckt ist, des gewichteten bestimmten Transparenzverhältnisses und des gewichteten bestimmten Unschärfeverhältnisses zu einer Summe, um die Objekterkennungszuverlässigkeit des Roboterarbeitswerkzeugsystems (100) zu bestimmen.

7. Roboterarbeitswerkzeugsystem (100) nach einem der Ansprüche 5 und 6, wobei, wenn die bestimmte Objekterkennungszuverlässigkeit des Roboterarbeitswerkzeugsystems (100) unter einem Objekterkennungszuverlässigkeit-Schwellenwert liegt, die mindestens eine Steuerung (130, 135) konfiguriert ist zum:

- Steuern einer nachfolgenden Aktion des Roboterarbeitswerkzeugsystems (100), um einen verschlechterten Betrieb des Rasenmähroboters (110) aufgrund der geringen Objekterkennungszuverlässigkeit zu vermeiden.

8. Roboterarbeitswerkzeugsystem (100) nach einem der Ansprüche 5 bis 7, wobei die mindestens eine Steuerung (130, 135) ferner konfiguriert ist zum:

- Empfangen einer Angabe, dass ein störendes Objekt von der Kameraeinheit (120) des Rasenmähroboters (110) entfernt wurde; und

- Rücksetzen, auf der Grundlage der Angabe, der Objekterkennungszuverlässigkeit des Roboterarbeitswerkzeugsystems (100).

9. Roboterarbeitswerkzeugsystem (100) nach einem der Ansprüche 1 bis 8, wobei die mindestens eine Steuerung (130, 135) konfiguriert ist, um die nachfolgende Aktion des Roboterarbeitswerkzeugsystems (100) zu steuern durch:

- Übertragen einer Nachricht an eine Ausgabevorrichtung (140, 145).

10. Roboterarbeitswerkzeugsystem (100) nach Anspruch 9, wobei die Nachricht zuverlässige versus unzuverlässige Bildpixel innerhalb der erhaltenen Bildrahmen definiert.

11. Roboterarbeitswerkzeugsystem (100) nach einem der Ansprüche 1 bis 10, wobei, wenn bestimmt wird, dass sich ein störendes Objekt auf der Kameraeinheit (120) des Rasenmähroboters (110) befindet, die mindestens eine Steuerung (130, 135) konfiguriert ist, um die nachfolgende Aktion des Roboterarbeitswerkzeugsystems (100) zu steuern durch:

- Einleiten eines Reinigungsvorgangs des Rasenmähroboters (110), um jegliche störenden Objekte auf der Kameraeinheit (120) des Rasenmähroboters (110) zu entfernen.

12. Roboterarbeitswerkzeugsystem (100) nach einem der Ansprüche 1 bis 11, wobei, wenn bestimmt wird, dass sich ein störendes Objekt auf der Kameraeinheit (120) des Rasenmähroboters (110) befindet, die mindestens eine Steuerung (130, 135) konfiguriert ist, um die nachfolgende Aktion des Roboterarbeitswerkzeugsystems (100) zu steuern durch:

   - Steuern des Fahrbetriebs des Rasenmähroboters (110).

13. Roboterarbeitswerkzeugsystem (100) nach einem der Ansprüche 1 bis 12, wobei die Vielzahl von Bildrahmen von der Kameraeinheit (120) erhalten wird, während sich mindestens einer von der Kameraeinheit (120) und dem Rasenmähroboter (110) bewegt.

14. Roboterarbeitswerkzeugsystem (100) nach einem der Ansprüche 1 bis 13, wobei die Vielzahl von Bildrahmen, die die Ansicht der Kameraeinheit (120) des Rasenmähroboters (110) wiedergeben, in festen vordefinierten Intervallen erhalten wird.

15. Roboterarbeitswerkzeugsystem (100) nach einem der Ansprüche 1 bis 14, wobei die mindestens eine Steuerung (130, 135) konfiguriert ist, um Pixelintensitätsgradienten innerhalb der Ansicht der Kameraeinheit (120) zu bestimmen durch:

   - Bestimmen eines zweidimensionalen, 2D-Pixelintensitätsgradientenbildes für jeden der Vielzahl der erhaltenen Bildrahmen;
   - Bestimmen einer pixelweisen Norm jedes 2D-Pixelintensitätsgradientenbildes; und
   - Mitteln der bestimmten pixelweisen Norm jedes 2D-Pixelintensitätsgradientenbildes in einen einzelnen Bildrahmen der Durchschnittsnormen von Pixelintensitätsgradienten.

16. Roboterarbeitswerkzeugsystem (100) nach einem der Ansprüche 1 bis 13, wobei die mindestens eine Steuerung (130, 135) ferner konfiguriert ist zum:

   - Bestimmen, auf der Grundlage der bestimmten Pixelintensitätsgradienten, der Konturen eines störenden Objekts auf der Kameraeinheit (120).

17. Roboterarbeitswerkzeugsystem (100) nach einem der Ansprüche 1 bis 16, wobei der mindestens eine Schwellenwert einen unteren Schwellenwert und einen oberen Schwellenwert umfasst und wobei die mindestens eine Steuerung (130, 135) konfiguriert ist, um zu bestimmen, ob sich ein störendes Objekt auf der Kameraeinheit (120) des Rasenmähroboters (110) befindet, auf der Grundlage des Vergleichs durch:

   - Bestimmen, dass sich ein störendes Objekt auf der Kameraeinheit (120) des Rasenmähroboters (110) befindet, wenn der bestimmte Pixelintensitätsgradient unter dem unteren Schwellenwert liegt;
   - Bestimmen, dass sich ein nicht behinderndes störendes Objekt auf der Kameraeinheit (120) des Rasenmähroboters (110) befindet, wenn der bestimmte Pixelintensitätsgradient über dem unteren Schwellenwert und unter dem oberen Schwellenwert liegt; und
   - Bestimmen, dass sich kein störendes Objekt auf der Kameraeinheit (120) des Rasenmähroboters (110) befindet, wenn der bestimmte Pixelintensitätsgradient über dem oberen Schwellenwert liegt.

18. Roboterarbeitswerkzeugsystem (100) nach einem der Ansprüche 1 bis 17, wobei die Position und/oder der Winkel, die jedem der erhaltenen Bildrahmen zugeordnet sind, von mindestens einem Positionssensor (160) des Rasenmähroboters (110) erhalten werden.

19. Roboterarbeitswerkzeugsystem (100) nach einem der Ansprüche 1 bis 18, wobei das Roboterarbeitswerkzeugsystem (100) den Rasenmähroboter (110) umfasst, der die Kameraeinheit (120) umfasst.

20. Verfahren, das von mindestens einer Steuerung (130, 135) durchgeführt wird, zum Bestimmen, ob sich auf einer Kameraeinheit (120) eines Rasenmähroboters (110) ein behinderndes und störendes Objekt, wie Schmutz, befindet, das den Betrieb des Rasenmähroboters (110) verschlechtern kann, wobei der Rasenmähroboter (110) konfiguriert ist, um eine Arbeitsaufgabe autonom durchzuführen, und wobei das Verfahren umfasst:

   - Erhalten einer Vielzahl von Bildrahmen, die die Ansicht der Kameraeinheit (120) des Rasenmähroboters (110) wiedergeben, wobei jeder der erhaltenen Bildrahmen einer anderen Position und/oder einem anderen Winkel zugeordnet ist verglichen mit der anderen erhaltenen Vielzahl von Bildrahmen;
   - Bestimmen, auf der Grundlage der erhaltenen Bildrahmen, von Pixelintensitätsgradienten innerhalb der Ansicht der Kameraeinheit (120);
   - Vergleichen jedes der bestimmten Pixelintensitätsgradienten mit mindestens einem Schwellenwert;
   - Bestimmen, auf der Grundlage des Vergleichs, ob sich ein störendes Objekt auf der Kameraeinheit (120) des Rasenmähroboters (110) befindet; und

- Steuern einer nachfolgenden Aktion des Roboterarbeitswerkzeugsystems (100) auf der Grundlage der Bestimmung, ob sich ein störendes Objekt auf der Kameraeinheit (120) des Rasenmähroboters (110) befindet.

**Revendications**

1. Système d'outil de travail robotisé (100) configuré pour déterminer la présence ou non d'un objet interférent et perturbateur quelconque, tel que de la saleté, sur une unité de caméra (120) d'une tondeuse à gazon robotisée (110) qui pourrait dégrader le fonctionnement de la tondeuse à gazon robotisée (110),

dans lequel la tondeuse à gazon robotisée (110) est configurée pour effectuer une tâche de travail de manière autonome, et dans lequel le système d'outil de travail robotisé (100) comprend au moins un dispositif de commande (130, 135) configuré pour :

- obtenir une pluralité de trames d'images reflétant la vue de l'unité de caméra (120) de la tondeuse à gazon robotisée (110), dans lequel chacune des trames d'images obtenues est associée à une position différente et/ou un angle différent par comparaison avec l'autre pluralité de trames d'images obtenue ;
- déterminer, en fonction des trames d'images obtenues, les gradients d'intensité de pixel dans la vue de l'unité de caméra (120) ;
- comparer chacun des gradients d'intensité de pixel déterminés par rapport à au moins un seuil ; déterminer, en fonction de la comparaison, la présence ou non d'un objet interférent sur l'unité de caméra (120) de la tondeuse à gazon robotisée (110) ; et
- commander une action ultérieure du système d'outil de travail robotisé (100) en fonction de la détermination de la présence ou non d'un objet interférent sur l'unité de caméra (120) de la tondeuse à gazon robotisée (110).

2. Système d'outil de travail robotisé (100) selon la revendication 1, dans lequel l'au moins un dispositif de commande (130, 135) est en outre configuré pour:

- déterminer, en fonction des trames d'images obtenues et de la détermination de la présence ou non d'un objet interférent sur l'unité de caméra (120), une proportion d'une trame d'image non occultée par des objets interférents quelconques.

3. Système d'outil de travail robotisé (100) selon la revendication 2, dans lequel l'au moins un dispositif de commande (130, 135) est configuré pour :

- déterminer, en fonction de la détermination de la présence ou non d'un objet interférent sur l'unité de caméra (120), une intensité de tous les pixels dans les trames d'images obtenues comprenant un objet interférent ;
- déterminer, en fonction de la détermination de la présence ou non d'un objet interférent sur l'unité de caméra (120), une intensité de tous les pixels dans les trames d'images obtenues ne comprenant pas un objet interférent ;
- comparer l'intensité déterminée pour les pixels comprenant un objet interférent avec l'intensité déterminée pour les pixels ne comprenant pas un objet interférent ; et
- déterminer, en fonction de la comparaison, un rapport de transparence pour tout objet interférent déterminé sur l'unité de caméra (120) de la tondeuse à gazon robotisée (110).

4. Système d'outil de travail robotisé (100) selon la revendication 3, dans lequel l'au moins un dispositif de commande (130, 135) est en outre configuré pour:

- déterminer, en fonction de la détermination de la présence ou non d'un objet interférent sur l'unité de caméra (120), un flou de tous les pixels dans les trames d'images obtenues comprenant un objet interférent ;
- déterminer, en fonction de la détermination de la présence ou non d'un objet interférent sur l'unité de caméra (120), un flou de tous les pixels dans les trames d'images obtenues ne comprenant pas un objet interférent ;
- comparer le flou déterminé pour les pixels comprenant un objet interférent avec le flou déterminé pour les pixels ne comprenant pas un objet interférent ; et
- déterminer, en fonction de la comparaison, un rapport de flou pour tout objet interférent déterminé sur l'unité de caméra (120) de la tondeuse à gazon robotisée (110).

5. Système d'outil de travail robotisé (100) selon la revendication 4, dans lequel l'au moins un dispositif de commande (130, 135) est en outre configuré pour:

- déterminer, en fonction de la proportion déterminée de la trame d'image non occultée par des objets interférents quelconques, du rapport de transparence déterminé et du rapport de flou déterminé, une fiabilité de détection d'objet du système d'outil de travail robotisé (100).

6. Système d'outil de travail robotisé (100) selon la revendication 5, dans lequel l'au moins un dispositif de commande (130, 135) est configuré pour déterminer la fiabilité de détection d'objet du système d'outil de travail robotisé (100) par :

- la détermination d'un poids pour chacun parmi la proportion déterminée de la trame d'image non occultée par des objets interférents quelconques, le rapport de transparence déterminé et le rapport de flou déterminé ; et
- additionner chacun parmi la proportion déterminée pondérée de la trame d'image non occultée par des objets interférents, le rapport de transparence déterminé pondéré et le rapport de flou déterminé pondéré en une somme, afin de déterminer la fiabilité de détection d'objet du système d'outil de travail robotisé (100).

7. Système d'outil de travail robotisé (100) selon l'une quelconque des revendications 5 et 6, dans lequel lorsque la fiabilité de détection d'objet déterminée du système d'outil de travail robotisé (100) est inférieure à un seuil de fiabilité de détection d'objet, l'au moins un dispositif de commande (130, 135) est configuré pour :

- commander une action ultérieure du système d'outil de travail robotisé (100) afin d'éviter une dégradation du fonctionnement de la tondeuse à gazon robotisée (110) en raison de la faible fiabilité de détection d'objet.

8. Système d'outil de travail robotisé (100) selon l'une quelconque des revendications 5 à 7, dans lequel l'au moins un dispositif de commande (130, 135) est en outre configuré pour :

- recevoir une indication selon laquelle tout objet interférent sur l'unité de caméra (120) de la tondeuse à gazon robotisée (110) a été retiré ; et
- réinitialiser, en fonction de l'indication, la fiabilité de détection d'objet du système d'outil de travail robotisé (100).

9. Système d'outil de travail robotisé (100) selon l'une quelconque des revendications 1 à 8, dans lequel l'au moins un dispositif de commande (130, 135) est configuré pour commander l'action ultérieure du système d'outil de travail robotisé (100) par :

- la transmission d'un message à un dispositif de sortie (140, 145).

10. Système d'outil de travail robotisé (100) selon la revendication 9, dans lequel le message définit les pixels d'image fiables et non fiables dans les trames d'images obtenues.

11. Système d'outil de travail robotisé (100) selon l'une quelconque des revendications 1 à 10, dans lequel, lors de la détermination de la présence d'un objet interférent sur l'unité de caméra (120) de la tondeuse à gazon robotisée (110), l'au moins un dispositif de commande (130, 135) est configuré pour commander l'action ultérieure du système d'outil de travail robotisé (100) par :

- le lancement d'une opération de nettoyage de la tondeuse à gazon robotisée (110) afin de retirer tout objet interférent sur l'unité de caméra (120) de la tondeuse à gazon robotisée (110).

12. Système d'outil de travail robotisé (100) selon l'une quelconque des revendications 1 à 11, dans lequel, lors de la détermination de la présence d'un objet interférent sur l'unité de caméra (120) de la tondeuse à gazon robotisée (110), l'au moins un dispositif de commande (130, 135) est configuré pour commander l'action ultérieure du système d'outil de travail robotisé (100) par :

- la commande d'une opération de déplacement de la tondeuse à gazon robotisée (110).

13. Système d'outil de travail robotisé (100) selon l'une quelconque des revendications 1 à 12, dans lequel la pluralité de trames d'images est obtenue à partir de l'unité de caméra (120) alors qu'au moins l'une parmi l'unité de caméra (120) et la tondeuse à gazon robotisée (110) se déplace.

14. Système d'outil de travail robotisé (100) selon l'une quelconque des revendications 1 à 13, dans lequel la pluralité de trames d'images reflétant la vue de l'unité de caméra (120) de la tondeuse à gazon robotisée (110) est obtenue à intervalles fixes prédéfinis.

15. Système d'outil de travail robotisé (100) selon l'une quelconque des revendications 1 à 14, dans lequel l'au moins un dispositif de commande (130, 135) est configuré pour déterminer les gradients d'intensité de pixel dans la vue de l'unité de caméra (120) par :

- la détermination d'une image de gradient d'intensité de pixel bidimensionnelle, 2D, pour chacune de la pluralité de trames d'images obtenues ;
- la détermination d'une norme par pixel de chaque image de gradient d'intensité de pixel 2D ; et
- le calcul de la moyenne de la norme par pixel déterminée de chaque image de gradient d'intensité de pixel 2D en une seule trame d'image de normes moyennes de gradients d'intensité de pixel.

**16.** Système d'outil de travail robotisé (100) selon l'une quelconque des revendications 1 à 13, dans lequel l'au moins un dispositif de commande (130, 135) est en outre configuré pour :

    - déterminer, en fonction des gradients d'intensité de pixel déterminés, les contours d'un objet interférent sur l'unité de caméra (120).

**17.** Système d'outil de travail robotisé (100) selon l'une quelconque des revendications 1 à 16, dans lequel ledit au moins un seuil comprend un seuil inférieur et un seuil supérieur et dans lequel l'au moins un dispositif de commande (130, 135) est configuré pour déterminer la présence ou non d'un objet interférent sur l'unité de caméra (120) de la tondeuse à gazon robotisée (110) en fonction de la comparaison par :

    - la détermination de la présence d'un objet interférent sur l'unité de caméra (120) de la tondeuse à gazon robotisée (110) si le gradient d'intensité de pixel déterminé est inférieur au seuil inférieur ;
    - la détermination de la présence d'un objet interférent non dérangeant sur l'unité de caméra (120) de la tondeuse à gazon robotisée (110) si le gradient d'intensité de pixel déterminé est supérieur au seuil inférieur et inférieur au seuil supérieur ; et
    - la détermination de la non présence d'objet interférent sur l'unité de caméra (120) de la tondeuse à gazon robotisée (110) si le gradient d'intensité de pixel déterminé est supérieur au seuil supérieur.

**18.** Système d'outil de travail robotisé (100) selon l'une quelconque des revendications 1 à 17, dans lequel la position et/ou l'angle associés à chacune des trames d'images obtenues sont obtenus à partir d'au moins un capteur de position (160) de la tondeuse à gazon robotisée (110).

**19.** Système d'outil de travail robotisé (100) selon l'une quelconque des revendications 1 à 18, dans lequel le système d'outil de travail robotisé (100) comprend la tondeuse à gazon robotisée (110) comprenant l'unité de caméra (120).

**20.** Procédé, effectué par au moins un dispositif de commande (130, 135), permettant de déterminer la présence ou non d'un objet interférent et perturbateur quelconque, tel que de la saleté, sur une unité de caméra (120) d'une tondeuse à gazon robotisée (110) qui peut dégrader le fonctionnement de la tondeuse à gazon robotisée (110), la tondeuse à gazon robotisée (110) est configurée pour effectuer une tâche de travail de manière autonome, et dans lequel le procédé comprend :

- l'obtention d'une pluralité de trames d'images reflétant la vue de l'unité de caméra (120) de la tondeuse à gazon robotisée (110), dans lequel chacune des trames d'images obtenues est associée à une position différente et/ou un angle différent par comparaison avec l'autre pluralité de trames d'images obtenue ;
- la détermination, en fonction des trames d'images obtenues, des gradients d'intensité de pixel dans la vue de l'unité de caméra (120) ;
- la comparaison de chacun des gradients d'intensité de pixel déterminés par rapport à au moins un seuil ;
- la détermination, en fonction de la comparaison, de la présence ou non d'un objet interférent sur l'unité de caméra (120) de la tondeuse à gazon robotisée (110) ; et
- la commande d'une action ultérieure du système d'outil de travail robotisé (100) en fonction de la détermination de la présence ou non d'un objet interférent sur l'unité de caméra (120) de la tondeuse à gazon robotisée (110).

Fig. 1

Fig. 2

Fig. 3

Fig. 4

Fig. 5

Fig. 6

Fig. 7

<u>800</u>

```
┌─────────────────────────────────────┐
│         Obtain image frames          │
│                 810                  │
└─────────────────────────────────────┘
                    │
                    ▼
┌─────────────────────────────────────┐
│   Determine pixel intensity gradients│
│                 820                  │
└─────────────────────────────────────┘
                    │
                    ▼
┌─────────────────────────────────────┐
│      Compare pixel gradients against │
│              threshold(s)            │
│                 830                  │
└─────────────────────────────────────┘
                    │
                    ▼
┌─────────────────────────────────────┐
│  Determine whether there are interfering│
│                objects               │
│                 840                  │
└─────────────────────────────────────┘
                    │
                    ▼
┌─────────────────────────────────────┐
│ Control a subsequent action based on the│
│              determination           │
│                 850                  │
└─────────────────────────────────────┘
```

Fig. 8

## 900

**Fig. 9**

## 1000

**Fig. 10**

<u>1100</u>

```
┌──────────────┐
│     1145     │
│   Extended   │
│ Bounding Box │
└──────┬───────┘
       │
       ▼
┌──────────────┐     ┌──────────────┐
│     1140     │     │     1150     │
│   Average    │────▶│  Background  │──────────────┐
│ (background  │     │  intensity   │              │
│    pixel)    │     └──────────────┘              │
└──────────────┘                                   │
                                                   ▼
┌──────────────┐  ┌──────────────┐  ┌──────────┐  ┌──────────────┐
│     1110     │  │     1120     │  │   1130   │  │     1190     │
│ Video Stream │─▶│  Frame Rate  │─▶│Pixel-wise│  │ Transparancy │
│   Input fr   │  │  Decimation  │  │ Average  │  │  ratio (TR)  │
│    camera    │  │              │  │image over│  │              │
└──────────────┘  └──────────────┘  │ N frames │  └──────────────┘
                                     └──────────┘
┌──────────────┐  ┌──────────────┐
│     1170     │  │     1180     │
│ Averge (dirt │─▶│  Dirt spots  │──────────────────┘
│ spot pixels) │  │  intensity   │
└──────────────┘  └──────────────┘
       ▲
       │
┌──────────────┐
│     1160     │
│   All Dirt   │
│   clusters   │
└──────────────┘
```

Fig. 11

1200

| 1245 Extended Bounding Box |
|---|

| 1240 Variance (background pixels) | 1250 Average of N frames | 1260 Average background Blurriness |

| 1210 Video Stream Input fr camera | 1220 Frame Rate Decimation | 1230 Laplacian filter |

| 1290 Bluriness ratio (BR) |

| 1270 Variance (dirt spot pixels) | 1280 Average over N frames | 1285 Average dirt spots Blurriness |

| 1275 All Dirt clusters |

Fig. 12

1300

1310

| 100 | | 140, 145 Memory/-ies | 130, 135 Processor(s) |

Fig. 13

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3553620 A1